# EUROPEAN PATENT APPLICATION

(11) **EP 4 148 318 A1**
(43) Date of publication of application: **15.03.2023**
(21) Application number: 22188621.1
(22) Date of filing: 03.08.2022
(51) Int. Cl.: F17C 1/00

(54) **HIGH-PRESSURE GAS STORAGE AND SUPPLY DEVICE**

(30) Priority: 18.08.2021 KR 20210108631
(71) Applicant: Iljin Hysolus Co., Ltd., Jeollabuk-do 55322 (KR)
(72) Inventor: LEE, Seok Jin, 55322 Wanju-gun (KR); RYU, Su Han, 55322 Wanju-gun (KR); KIM, Hui Chun, 55322 Wanju-gun (KR); YIM, Jun Young, 55322 Wanju-gun (KR)
(74) Representative: HGF

(57) **Abstract**

The present disclosure discloses a high-pressure gas storage and supply device. The disclosed high-pressure gas storage and supply device includes a plurality of gas storages tanks that store a high-pressure gas therein and selectively discharge the stored gas, and a gas transport pipe including tank inlet/outlet lines respectively connected to the plurality of gas storage tanks to fill the gas in the gas storage tanks or discharge the gas stored in the gas storage tanks. Thus, in the present disclosure, the gas may be filled in or discharged from the gas storage tanks by the same one tank inlet/outlet line, and thus a structure for filling or discharging the high-pressure gas can be simplified.

## Description

### CROSS-REFERENCE TO RELATED APPLICATION

This application claims priority to and the benefit of Korean Patent Application No. 10-2021-0108631 filed on August 18, 2021, the disclosure of which is incorporated herein by reference in its entirety.

### BACKGROUND

### 1. Field of the Invention

The present disclosure relates to a high-pressure gas storage and supply device, and more particularly, to a high-pressure gas storage and supply device in which filling and discharging of a gas to and from a gas storage tank may be implemented using the same tank inlet/outlet line, and thus while a filling/discharging structure for a high-pressure gas is simplified, safety may be improved.

### 2. Discussion of Related Art

In recent years, interest in carbon emission is increasing again due to severe climate change, and various studies are being conducted to reduce the carbon emission.

Due to this atmosphere, research on a gas fuel that is a fuel having a low carbon content is also actively conducted, and actually, the supply of vehicles using a gas as a fuel is steadily increasing. In general, natural gas or liquefied petroleum gas is a representative gas fuel, and in recent years, technology using hydrogen as a fuel is also gradually increasing.

Further, in order to use the gas as the fuel, use of high-pressure storage tanks for compressing and storing the gas is essential. For example, since the gas is stored at a high pressure to increase the amount of fuel stored, the safety of a connection line as well as the safety of the high-pressure storage tank are very important.

In the gas supply system according to the related art, since a gas supply line and a gas discharge line should be installed in each of the high-pressure storage tanks in order to supply the gas to a plurality of high-pressure storage tanks, the number of connection points between the high-pressure storage tank and a fuel supply line increases, and thus a structure is complicated and the safety is degraded. Therefore, it is required to improve this problem.

Meanwhile, Korean Patent Application Publication No. 10-2015-0138887 (published on December 11, 2015) discloses a "duel fuel injection system using hydrogen gas," and Korean Patent Registration No. 10-2112950 (registered on May 13, 2020) discloses a "hydrogen mixed supply device for driving an engine."

### SUMMARY OF THE INVENTION

The present disclosure is directed to providing a high-pressure gas storage and supply device in which, since a gas is filled in a gas storage tank or the filled gas is discharged to a use place such an engine using one tank inlet/outlet line, a structure for filling and discharging a high-pressure gas can be simplified, and thus safety can be improved through the structure simplification.

According to an aspect of the present disclosure, there is provided a high-pressure gas storage and supply device including a plurality of gas storage tanks for storing a high-pressure gas therein wherein stored gas is discharged from each of the gas storage tanks selectively and a gas transport pipe including tank inlet/outlet lines respectively connected to each of the plurality of gas storage tanks wherein the gas is filled into the gas storage tanks or the gas stored in the gas storage tanks is discharged, all through the respective inlet/outlet lines.

The gas transport pipe may include a gas filling line and a gas discharge line to form a filling path and a discharging path of the gas, and the tank inlet/outlet lines branch between the gas filling line and the gas discharging line and are respectively connected to the gas storage tanks.

The gas transport pipe may further include a gas filling/discharging common line connecting the gas filling line and the gas discharging line.

In the gas transport pipe, the tank inlet/outlet lines may branch off from the gas filling/discharging common line and may be connected to the gas storage tanks, respectively.

The gas filling line and the gas discharge line may be respectively connected to different gas storage tanks to form the tank inlet/outlet lines.

The gas storage tanks may include at least a first tank to a n^{th} tank.

In the gas transport pipe, the gas filling line may be directly connected to the first tank to form one of the tank inlet/outlet lines, and the gas filling line may be directly connected to the n^{th} tank to form another of the tank inlet/outlet lines.

The gas storage tanks may further include a valve part that is connected to the tank inlet/outlet lines and is selectively opened or closed to store or discharge the gas.

The foregoing and other objects, features, and advantages of the invention will become more apparent from the following detailed description, which proceeds with reference to the accompanying figures.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic diagram for describing a high-pressure gas storage and supply device according to an embodiment of the present disclosure;
FIG. 2 is a schematic diagram for describing a valve part of a gas storage tank according to an embodiment of the present disclosure;
FIG. 3 is an enlarged view for describing a main portion of the valve part of the gas storage tank according to an embodiment of the present disclosure;
FIG. 4 is a schematic diagram for describing filling of a gas by the high-pressure gas storage and supply device according to an embodiment of the present disclosure; and
FIG. 5 is a schematic diagram for describing discharging of a gas by the high-pressure gas storage and supply device according to an embodiment of the present disclosure.

### DETAILED DESCRIPTION OF EXEMPLARY EMBODIMENTS

Hereinafter, embodiments of a high-pressure gas storage and supply device according to the present disclosure will be described with reference to the accompanying drawings. In this process, the thicknesses of lines or the sizes of components illustrated in the drawings may be exaggerated for clarity and convenience of description.

Further, terms described below are terms defined in consideration of functions in the present disclosure and may change according to the intention or custom of a user or an operator. Therefore, definitions of these terms should be made based on the contents throughout the present specification.

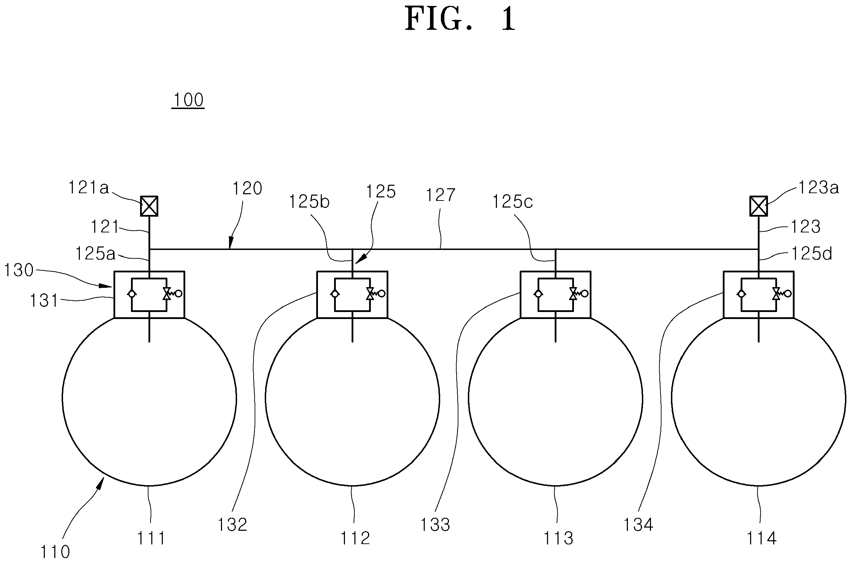

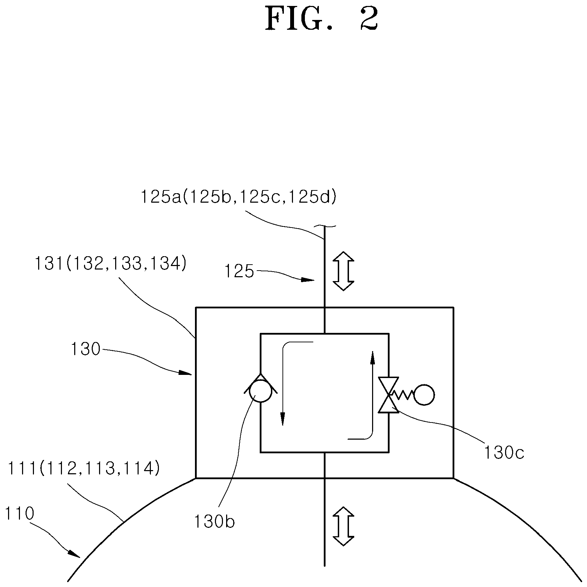

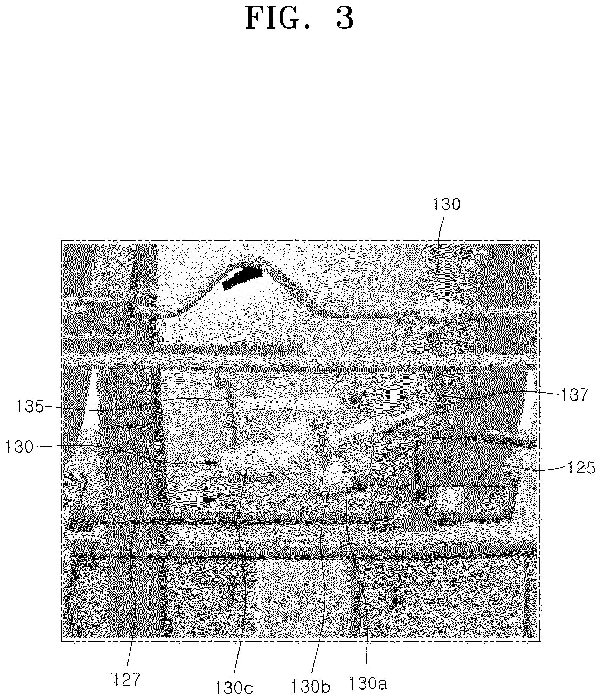

FIG. 1 is a schematic diagram for describing a high-pressure gas storage and supply device according to an embodiment of the present disclosure, FIG. 2 is a schematic diagram for describing a valve part of a gas storage tank according to an embodiment of the present disclosure, and FIG. 3 is an enlarged view for describing a main portion of the valve part of the gas storage tank according to an embodiment of the present disclosure.

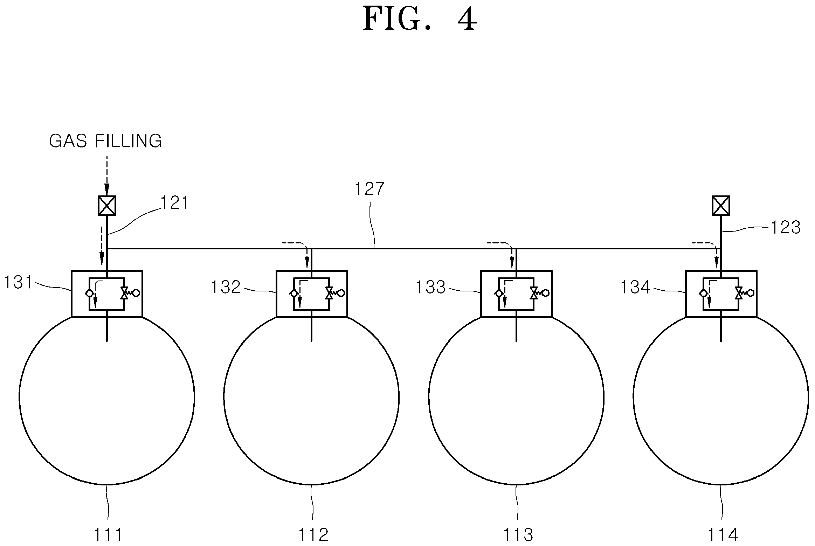

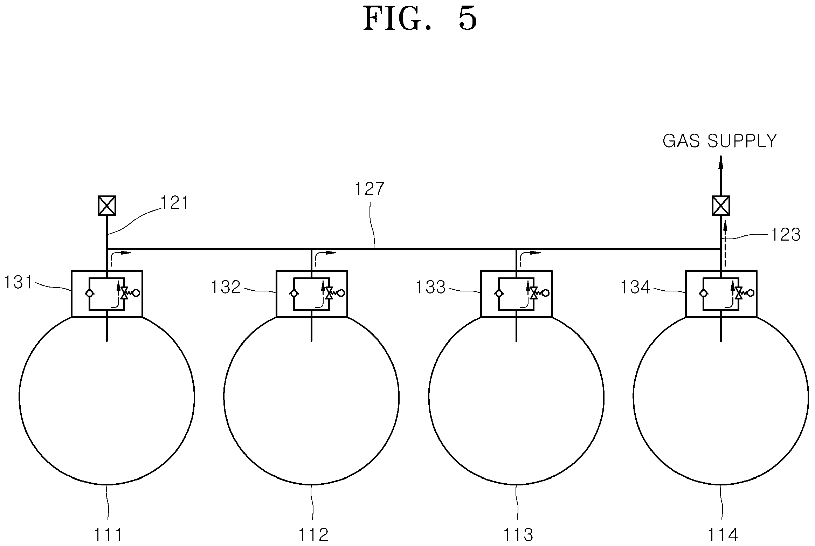

Further, FIG. 4 is a flowchart for describing filling of a gas by the high-pressure gas storage and supply device according to an embodiment of the present disclosure, and FIG. 5 is a flowchart for describing discharging of a gas by the high-pressure gas storage and supply device according to an embodiment of the present disclosure.

Referring to FIGS. 1 to 5, a high-pressure gas storage and supply device 100 according to an embodiment of the present disclosure is installed in a vehicle, a ship, or the like using fuels such as hydrogen gas, natural gas, liquefied petroleum gas or the like that is a high-pressure gas and is selectively connected to a separate gas filling facility (not illustrated).

The high-pressure gas storage and supply device 100 according to the present embodiment uses a filling line and a discharging line of the high-pressure gas in common, so that the entire structure can be simplified to improve safety and space utilization.

To this end, the high-pressure gas storage and supply device 100 according to the present embodiment includes a plurality of gas storage tanks 110 and a gas transport pipe 120 connected to the gas storage tanks 110 to fill or discharge the high-pressure gas while reducing a leak point.

In the present embodiment, the use of the high-pressure gas storage and supply device 100 in a vehicle, a ship, or the like is described as an example. However, the high-pressure gas storage and supply device 100 according to the present embodiment may be applied to various facilities as long as the facilities fill and discharge the high-pressure gas using the plurality of gas storage tanks 110.

The gas storage tank 110 according to the present embodiment is a container in which a gas such as hydrogen is compressed and stored in an internal space thereof. The gas storage tank 110 may be mounted on a vehicle such as a hydrogen fuel electric vehicle, a natural gas vehicle, and a liquefied petroleum gas vehicle, the gas introduced through the gas transport pipe 120 is stored in the gas storage tank 110, and the stored gas is discharged to an external engine or the like through the gas transport pipe 120.

Further, the gas storage tank 110 is manufactured in a cylindrical shape in which both ends have a semicircular shape, and thus has durability against the high-pressure gas. In addition, a plurality of gas storage tanks 110 are provided to increase the amount of gas stored and a usage time and are connected to the gas transport pipe 120.

In detail, the gas storage tank 110 includes a first tank 111, a second tank 112, a third tank 113, and a fourth tank 114, and valve parts 130 connected to the gas transport pipe 120 are provided in the first tank 111, the second tank 112, the third tank 113, and the fourth tank 114, respectively.

The first tank 111, the second tank 112, the third tank 113, and the fourth tank 114 are connected to the gas transport pipe 120 through the valve parts 130, and only one gas line connection port 130a is provided to connect the one gas transport pipe 120 to the valve part 130. In the present embodiment, the gas storage tank 110 having the four tanks is described as an example. However, as needed, the number of the tanks of the gas storage tank 110 may be two, three, and five or more.

The valve parts 130 include a first valve member 131 provided in the first tank 111, a second valve member 132 provided in the second tank 112, a third valve member 133 provided in the third tank 113, and a fourth valve member 134 provided in the fourth tank 114. The valve part 130 further includes a check valve 130b that is selectively opened or closed according to the filling of the gas and a discharge valve 130c that is selectively opened or closed to discharge the gas filled in the gas storage tank 110.

Further, the check valve 130b and the discharge valve 130c of the valve part 130 are provided inside each of the first valve member 131 to the fourth valve member 134. In this case, the discharge valve 130c may be configured by a solenoid valve and is selectively opened or closed through electric control.

Further, in each of the first valve member 131 to the fourth valve member 134 of the valve part 130, in a state in which the discharge valve 130c is blocked, when the high-pressure gas is introduced into the gas transport pipe 120, the check valve 130b is selectively opened by the pressure of the gas. As a result, the gas is filled in the gas storage tank 110.

Meanwhile, in the valve part 130, when the gas filled in the gas storage tank 110 is supplied to a use place such as an engine, the discharge valve 130c is selectively opened, and the gas discharged from the discharge valve 130c is transported to the gas transport pipe 120 through the gas line connection port 130a. As a result, the gas stored in the gas storage tank 110 may be discharged to the outside and supplied to the use place.

In addition, a wire harness 135 for controlling the discharge valve 130c and a vent line 137 for safety may be further connected to the valve part 130.

In particular, in the valve part 130, the gas transport pipe 120 is connected to the gas line connection port 130a so that the gas may be filled and discharged by one transport line.

The gas transport pipe 120 according to the present embodiment is connected to each of the first tank 111 to the fourth tank 114 to fill the gas in the gas storage tank 110 or discharge the gas stored in the gas storage tank 110.

For example, the gas transport pipe 120 has one end selectively connected to a filling nozzle (not illustrated) of a gas filling facility and the other end connected to the use place for use of the gas, wherein the one end and the other end are selectively opened or closed.

The gas transport pipe 120 includes a gas filling line 121 for filling the gas, a gas discharge line 123 for discharging the gas, a tank inlet/outlet line 125 connected to the gas storage tank 110, and a gas filling/discharging common line 127 connecting the gas filling line 121 and the gas discharge line 123. In this case, in the gas transport pipe 120, the tank inlet/outlet lines 125 branch off from the gas filling/discharging common line 127 and are each connected to the valve part 130 of the first tank 111 to the fourth tank 114.

The gas filling line 121 is provided with a filling valve 121a that is selectively opened or closed according to the connection of the filling nozzle and is connected to the gas discharge line 123 through the gas filling/discharging common line 127. The gas filling line 121 according to the present embodiment may be directly connected to the gas line connection port 130a of the first tank 111 to form the tank inlet/outlet line 125.

The gas discharge line 123 is provided with a supply valve 123a for selectively blocking the discharge of the gas at one end thereof and is connected to the tank inlet/outlet line 125 connected to the fourth tank 114. Like the gas filling line 121, the gas discharge line 123 according to the present embodiment may be also directly connected to the gas line connection port 130a of the fourth tank 114 to form the tank inlet/outlet line 125.

For example, the tank inlet/outlet lines 125 are respectively provided with a first inlet/outlet line 125a, a second inlet/outlet line 125b, a third inlet/outlet line 125c, and a fourth inlet/outlet line 125d that branch off from the gas filling/discharging common line 127 and are connected to the gas line connection ports 130a of the first tank 111 to the fourth tank 114. In this case, the first inlet/outlet line 125a may be formed as the gas filling line 121 is directly connected to the first tank 111, and the fourth inlet/outlet line 125d may be formed as the gas discharge line 123 is directly connected to the fourth tank 114.

The gas filling/discharging common line 127 is connected to the gas filling line 121 and the gas discharge line 123 at both ends thereof, and the first inlet/outlet line 125a to the fourth inlet/outlet line 125d branch off from the gas filling/discharging common line 127.

Hereinafter, an operation of the high-pressure gas storage and supply device according to an embodiment of the present disclosure will be described.

First, when the filling nozzle is connected to the filling valve 121a of the gas filling line 121 in a state in which the discharge valve 130c of the valve part 130 and the supply valve 123a of the gas discharge line 123 are blocked so as to fill the gas, the gas is transported along the gas transport pipe 120, the check valve 130b is opened by the pressure of the gas transported, and thus the gas is filled in the first tank 111 to the fourth tank 114. Further, when the gas is completely filled in the first tank 111 to the fourth tank 114 and the filling nozzle is separated, the filling valve 121a is blocked (see FIG. 5).

Meanwhile, when the gas filled in the gas storage tank 110 is used, the supply valve 123a of the gas discharge line 123 is opened, and the discharge valves 130c of the first tank 111 to the fourth tank 114 are selectively opened. Then, the gas discharged from the gas storage tank 110 through the discharge valve 130c passes through the tank inlet/outlet line 125, is transported to the gas filling/discharging common line 127, and is thus supplied to the use place such as an engine through the gas discharge line 123 (see FIG. 5).

In the high-pressure gas storage and supply device 100 according to the present disclosure, when the gas is filled in the gas storage tank 110 or the gas filled in the gas storage tank 110 is supplied to the use place such as an engine, the gas is filled or discharged by the one tank inlet/outlet line 125 connected to each tank. That is, since the gas may be filled in or discharged from the gas storage tank 110 by the one tank inlet/outlet line 125 branching off from the gas filling/discharging common line 127, a structure for filling or discharging the high-pressure gas can be simplified.

Further, in the high-pressure storage and supply device 100 according to the present disclosure, since the high-pressure gas may be filled in or discharged from the plurality of gas storage tanks 110 by the one tank inlet/outlet line 125, a leak point of the gas storage tank 110 can be reduced. Thus, durability and safety of the device can be improved, the number of components can be reduced to improve assembling properties, and space utilization can be increased during installation.

In a high-pressure gas storage and supply device according to an aspect of the present disclosure, unlike the related art, since a gas is filled in a gas storage tank or the filled gas is discharged to a use place such as an engine using one tank inlet/outlet line, a structure for filling and discharging a high-pressure gas can be simplified.

Further, according to the high-pressure gas storage and supply device according to the present disclosure, since the high-pressure gas is filled in and discharged from the plurality of gas storage tanks through one tank inlet/outlet line, a leak point of the gas storage tank that is a weak connection part is reduced, and thus safety can be improved.

Further, according to the high-pressure gas storage and supply device according to the present disclosure, since the gas storage tanks are connected to each other using one gas filling/discharging common line, the number of components and the number of connection portions can be reduced to improve assembling properties, and space utilization can be increased.

Although the present disclosure has been described with reference to one embodiment illustrated in the drawings, the description is merely illustrative, and those skilled in the art to which the technology belongs could understand that various modifications and other equivalent embodiments may be made. Thus, the true technical scope of the present disclosure should be determined by the appended claims.

Those of ordinary skill in the art to which the present invention pertains should understand that the present invention may be practiced in other specific forms without changing the technical idea or essential features thereof. Therefore, the embodiments described herein should be understood as illustrative in all aspects, instead of limiting. The scope of the present invention is defined by the claims below rather than the detailed description above. The meaning and scope of the claims and all changes or modifications derived from their equivalents should be interpreted as falling within the scope of the present invention.

It should be understood that this disclosure is, in many respects, only illustrative. Changes may be made in details, particularly in matters of shape, size, and arrangement of steps without exceeding the scope of the disclosure. This may include, to the extent that it is appropriate, the use of any of the features of one example embodiment being used in other embodiments. The invention's scope is, of course, defined in the language in which the appended claims are expressed.

## Claims

1. A high-pressure gas storage and supply device comprising:
a plurality of gas storage tanks for storing a high-pressure gas therein wherein stored gas is discharged from each of the gas storage tanks selectively; and
a gas transport pipe including tank inlet/outlet lines respectively connected to each of the plurality of gas storage tanks wherein the gas is filled into the gas storage tanks or the gas stored in the gas storage tanks is discharged, all through the respective inlet/outlet lines.

2. The high-pressure gas storage and supply device of claim 1, wherein the gas transport pipe includes a gas filling line and a gas discharge line to fill and discharge the gas, and the tank inlet/outlet lines branch between the gas filling line and the gas discharging line and are respectively connected to the gas storage tanks.

3. The high-pressure gas storage and supply device of claim 2, wherein the gas transport pipe further includes a gas filling/discharging common line connecting the gas filling line and the gas discharging line, and
wherein the tank inlet/outlet lines branch off from the gas filling/discharging common line and are connected to the gas storage tanks, respectively.

4. The high-pressure gas storage and supply device of claim 2 or 3, wherein the gas filling line and the gas discharge line are respectively connected to different gas storage tanks to form the tank inlet/outlet lines.

5. The high-pressure gas storage and supply device of claim 2 or 3, wherein the gas storage tanks include at least a first tank to a n^{th} tank,
wherein the gas filling line is directly connected to the first tank to form one of the tank inlet/outlet lines, and
wherein the gas discharging line is directly connected to the n^{th} tank to form another of the tank inlet/outlet lines.

6. The high-pressure gas storage and supply device of any one of claims 1 to 3, wherein the gas storage tanks further include a valve part that is connected to the tank inlet/outlet line and is selectively opened or closed to store or discharge the gas.
